# EUROPEAN PATENT APPLICATION

(11) **EP 2 919 341 A1**
(43) Date of publication of application: **16.09.2015**
(21) Application number: 13854144.6
(22) Date of filing: 08.08.2013
(51) Int. Cl.: H02G 3/04, B60R 16/02

(54) **WIRE HARNESS**

(30) Priority: 08.11.2012 JP 2012245990; 19.04.2013 JP 2013088425
(71) Applicant: Sumitomo Wiring Systems, Ltd., Yokkaichi-shi, Mie 510-8503 (JP)
(72) Inventor: KOBAYASHI Yusuke, Yokkaichi-shi Mie 510-8503 (JP); SONODA Tetsuya, Yokkaichi-shi Mie 510-8503 (JP); HAMAMOTO Isamu, Yokkaichi-shi Mie 510-8503 (JP); SATO Takeshi, Yokkaichi-shi Mie 510-8503 (JP); ADACHI Takanori, Yokkaichi-shi Mie 510-8503 (JP)
(74) Representative: Horn Kleimann Waitzhofer Patentanwälte PartG mbB
(86) International application number: PCT/JP2013/071532
(87) International publication number: WO 2014/073251

(57) **Abstract**

It is an object of the present invention, with regard to a wire harness for being attached together with a sheet-like cover member to a door panel of a vehicle, to realize a simplification and reduction in the number of steps of the installation work and moreover to decrease the weight and cost of the wire harness. A wire harness comprises an electric wire and a sheet-like service hole cover having elasticity for being attached to the inside of the door panel of a vehicle. The electric wire includes an inside wiring section, which extends along a first surface of the service hole cover, and an outside wiring section, which is fed through to a second-surface side, the electric wire being united with the service hole cover in the inside wiring section.

## Description

### Technical Field

The present invention relates to a wire harness for being mounted to the inside of a door panel of a vehicle.

### Background Art

As shown in Patent Document 1, in a vehicle such as an automobile, a wire harness including electric wires and a service hole cover is attached to the inside of a door panel. The service hole cover is a flexible sheet-like member, which covers service holes formed in the inner panel of a double-structure door panel. The service hole cover is a waterproof and dustproof member to prevent liquids, dust and the like from entering through the service holes into the cabin interior of the vehicle.

Whereas the wire harness is attached to the door panel in a condition extending further to the inside of the service hole cover, a part of the electric wires of the wire harness is fed through the service hole cover to be wired to the door panel side.

The portion of the service hole cover where the electric wires pass through has a double structure, which includes an inner sheet wherein a slit for feeding therethrough the electric wires is formed and an outer sheet hanging down and overlapping the outer surface of the inner sheet. Thereby, foreign substances such as liquids and dust are prevented from entering from outside the service hole cover via the electric wire feedthrough into the inside.

As shown in Patent Document 1, the wire harness is fixed by clamps or the like to portions of the inner surface of the door panel where the service hole cover is not present, for example to portions around the service hole cover. Furthermore, the electric wires fed through the service hole cover are connected to electrical equipment to be placed in the door panel, for example electrical equipment associated with a speaker, a power window, a door lock, or the like.

The wire harness and the service hole cover attached to the door panel are covered by a door trim. Further, a soundproofing sheet made of a sheet-like soundproofing material is placed between the door trim and the wire harness attached to the door panel. The soundproofing material is, for example, a non-woven fabric of synthetic resin or the like. Additionally, the soundproofing material is also a sound absorbing material, a sound-deadening material, and a cushioning material.

### Citation List

### Patent Documents

Patent Document 1: JP 2012-130230A

### Summary of the Invention

### Technical Problem

As for the process of assembling the conventional wire harness with a door panel of a vehicle, in addition to the task of attaching the service hole cover to the door panel and the task of fixing a part of the electric wires to the door panel, there has been necessary the troublesome and difficult task of feeding electric wires through the slit in the service hole cover to connect them to the electrical equipment.

Furthermore, with the conventional wire harness, the electric wires have to be wired across a plurality of fixing positions outside the service hole cover and the feedthrough position within the service hole cover. Therefore, long electric wires need to be used, which has become an obstacle to reducing the weight and cost of the wire harness.

It is an object of the present invention, with regard to a wire harness for being attached together with a sheet-like cover member to a door panel of a vehicle, to realize a simplification and reduction in the number of steps of the installation work and moreover to decrease the weight and cost of the wire harness.

### Solution to Problem

A wire harness according to a first aspect of the invention comprises a sheet-like cover member having flexibility, for being attached to the inside of a door panel of a vehicle, and an electric wire. The electric wire includes a first-surface side portion extending along a first surface of the front and rear surfaces of the cover member, as well as a second-surface side portion fed through the cover member from the first-surface side to an opposing second-surface side, and is united with the cover member at the first-surface side portion.

A wire harness according to a second aspect of the invention is a wire harness according to the first aspect. The wire harness according to the second aspect further comprises a soundproofing sheet made of a sheet-like sound insulation. The soundproofing sheet is joined to the first surface of the cover member, giving support also to the first-surface side portion of the electric wire.

A wire harness according to a third aspect of the invention is a wire harness according to the second aspect. The wire harness according to the third aspect comprises a pair of soundproofing sheets. The soundproofing sheets of the pair are joined to each other in a superposed state that sandwichingly supports the first-surface side portion of the electric wire, and joined to the first surface of the cover member.

A wire harness according to a fourth aspect of the invention is a wire harness according to the second aspect or the third aspect. The wire harness according to the fourth aspect further comprises a plurality of sheet pieces including a thermoplastic resin. The sheet pieces are joined, by spot welding in a state individually abutted against a plurality of positions on the second surface of the cover member, to the cover member together with the soundproofing sheet.

A wire harness according to a fifth aspect of the invention is a wire harness according to the third aspect. In the wire harness according to the fourth aspect, a junction of the pair of soundproofing sheets joined in the superposed state includes a portion wherein the pair of soundproofing sheets, the cover member, and a sheet piece including a thermoplastic resin and abutted against the second surface of the cover member are joined by welding.

A wire harness according to a sixth aspect of the invention is a wire harness according to any one of the first to fifth aspects. In the wire harness according to the sixth aspect, at least part of the soundproofing sheet is joined by an adhesive to the first surface of the cover member.

### Advantageous Effects of the Invention

Each of the wire harnesses according to the above aspects has a structure wherein a sheet-like cover member and an electric wire are united in a state with the electric wire having been fed through the cover member. Therefore, just by performing the task of connecting the electric wire having been fed through the cover member beforehand to the electrical equipment in the door panel, and the task of attaching the cover member to the inner surface of the door panel, installation work for the cover member and the electric wire on the door panel is complete. Consequently, in addition to the task of fixing part of the electric wire to the door panel being unnecessary, the troublesome and difficult task of feeding the electric wire through the cover member to connect it to the electrical equipment in the door panel is unnecessary, too. This enables a simplification and reduction in the number of steps of the installation work for the wire harness.

Also, because the electric wire, which is united with the cover member, does not need to be fixed directly to the door panel, there is no need for it to be wired across a plurality of fixing positions outside the cover member and the feedthrough position within the cover member. Thus, by employing the wire harnesses according to the above aspects, a reduction over the prior art in weight and cost of the electric wire is enabled.

Furthermore, in the wire harnesses according the second and third aspects, the electric wire is supported by the soundproofing sheet, which is joined to the cover member. Therefore, by performing only the task of connecting the electric wire fed through the cover member to the electrical equipment and the task of attaching the cover member to the inner surface of the door panel, the installation work for the cover member, the electric wire, and the soundproofing sheet on the door panel is complete. Therefore, the number of installation steps for parts such as a wire harness to the door panel is further reduced.

Additionally, the soundproofing sheet prevents that abnormal noise arises when the electric wire hits against surrounding objects. In particular, in the wire harness according to the third aspect, the electric wire is united with the cover member by being partially sandwiched between the pair of soundproofing sheets, which are joined to the cover member. For this reason, the pair of soundproofing sheets more reliably protects against noise.

Furthermore, in the wire harnesses according to the fourth and fifth aspects, the cover member is welded to the soundproofing sheet and the sheet pieces, which include a thermoplastic resin, in a state of being sandwiched between the sheet pieces and the soundproofing sheet. This enables to prevent the thin, sheet-like cover member from being torn or deformed when the cover member and the soundproofing sheet are being welded.

Further, in the wire harness according to the sixth aspect, the cover member and the soundproofing sheet are joined by an adhesive. Thus, the cover member is not heated to a high temperature, which enables to prevent the thin cover member from being torn or deformed by being heated.

### Brief Description of Drawings

FIG. 1 is a front view of a wire harness 10 according to a first embodiment of the present invention.
FIG. 2 is a front view of a service hole cover comprised by the wire harness 10.
FIG. 3 is a cross-sectional view of a slit portion of the service hole cover in the wire harness 10.
FIG. 4 is a front view of double-layer soundproofing sheets and a wire group before they are combined.
FIG. 5 is a front view of the double-layer soundproofing sheets and the wire group after they have been combined.
FIG. 6 is a cross-sectional view of a junction of a soundproofing sheet and the service hole cover in the wire harness 10.
FIG. 7 is a front view of a wire fastening portion of a soundproofing sheet employable in the wire harness 10.
FIG. 8 is a front view of a tongue portion of the soundproofing sheet employable in the wire harness 10.
FIG. 9 is a front view of a wire harness 10A according to a second embodiment of the present invention.
FIG. 10 is a cross-sectional view of a wire support portion of a soundproofing sheet in the wire harness 10A.
FIG. 11 is a front view of a wire harness 10B according to a third embodiment of the present invention.
FIG. 12 is a sectional view of a junction of a soundproofing sheet and a service hole cover in a wire harness 10C according to a fourth embodiment of the present invention.
FIG. 13 is a sectional view of a junction of a soundproofing sheet and a service hole cover in a wire harness 10D according to a fifth embodiment of the present invention.

### Description of Embodiments

Below, embodiments of the present invention will be described with reference to the accompanying drawings. The following embodiments are examples concretizing the present invention, and are not to limit the scope of the invention. Each wire harness in the embodiments given below is for being attached to the inside of a door panel of a vehicle.

### <First embodiment>

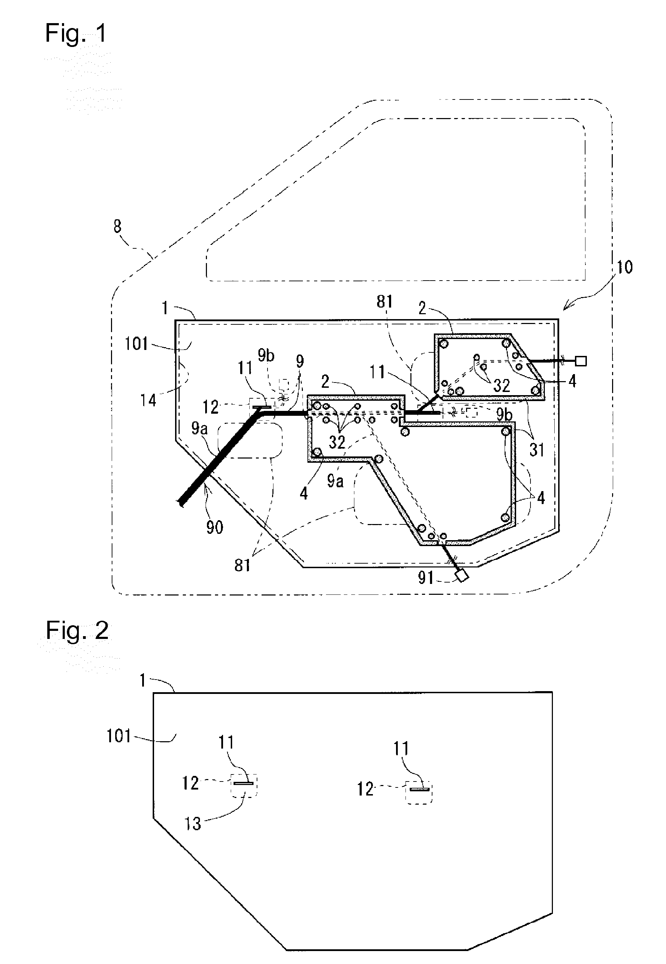

First, with reference to FIGS. 1 to 6, will be described a wire harness 10 according to a first embodiment of the present invention. As shown in FIG. 1, the wire harness 10 is provided with a wire group 90 including a plurality of electric wires 9, a service hole cover 1, and double-layer soundproofing sheets 2.

### <Wire group>

The wire group 90 includes electric wires 9 to be attached to a door panel 8 of a vehicle. The electric wires 9 are insulated wires having a core wire, which is an elongated conductor, and an insulating coating, which is an insulator that covers the periphery of the core wire. The core wires of the electric wires 9 are, for example, wire material of a metal composed mainly of copper or aluminum. The insulating coatings of the electric wires 9 are, for example, insulators made of a synthetic resin such as polyvinyl chloride, polyethylene, fluorinated resin, or polyester. In the example shown in FIG. 1, connectors 91 are provided at the end of the electric wires 9. In FIG. 1, the door panel 8 is depicted in phantom (two-dot chain lines).

### <Service hole cover>

The service hole cover 1 is a flexible sheet-like cover member to be attached (for attachment) to the inside of the door panel 8 of the vehicle. The service hole cover 1 is, for example, a polyethylene sheet or the like. It is noted that the side in the foreground when looking at FIG. 1 is the inside of the door panel 8, that is, the cabin interior side.

In the following description, the cabin interior side surface of the service hole cover 1 is referred to as first surface 101 and the door panel 8 side surface of the service hole cover 1 is referred to as second surface 102.

it's the edge portion of rhe service hole cover 1 is adhered to the inner surface of the door panel 8, covering service holes 81 formed in an inner panel of the double-structure door panel 8. The service hole cover 1 may be adhered to the inner surface of the door panel 8 by an adhesive such as butyl tape, for example.

The service hole cover 1 is a waterproof and dustproof member to prevent liquids, dust and the like from entering through the service holes 81 into the cabin interior of the vehicle. In FIG. 1, the service holes 81 of the door panel 8 and the portion 14 adhered to the door panel 8 on the service hole cover 1 are shown in phantom (two-dot chain lines).

While the wire group 90 is attached to the door panel 8 in a condition extending further to the inside of the service hole cover 1, a part of the electric wires 9 of the wire group 90 is fed through the service hole cover 1 and wired to the door panel 8 side. Therefore, as shown in FIGS. 1 and 2, a slit 11 for feeding therethrough the electric wires 9 is formed in the service hole cover 1.

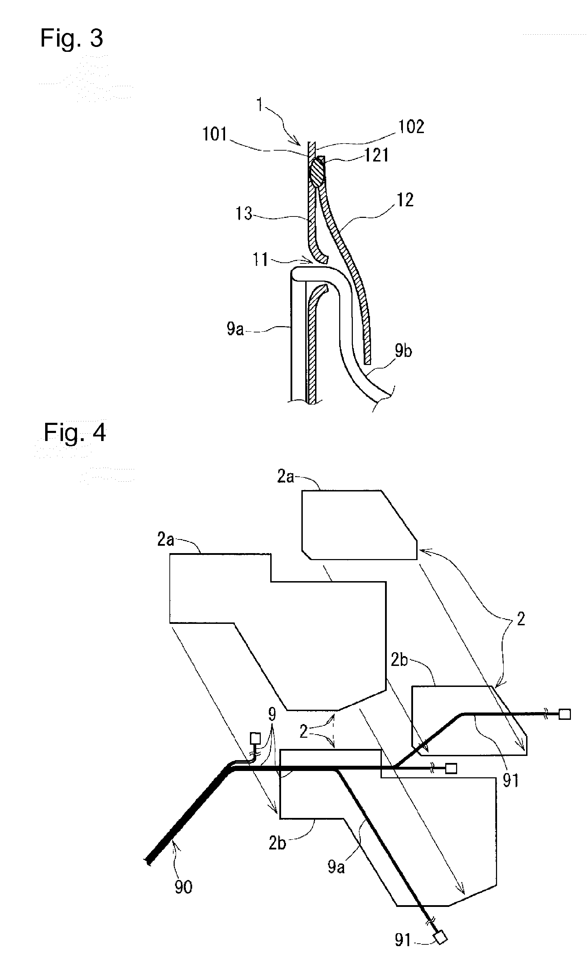

As shown in FIG. 3, the portion of the service hole cover 1 where the electric wires 9 pass through has a double structure, which includes an inner sheet 13 wherein the slit 11 for feeding therethrough the electric wires 9 is formed and an outer sheet 12 hanging down and overlapping the outer surface of the inner sheet 13. In FIG. 3, the left-hand side when facing the drawing is the inner side (cabin interior side), and the right-hand side when facing the drawing is the outer side (door panel 8 side).

For example, an upper edge 121 of the outer sheet 12 is joined by welding or an adhesive to the inner sheet 13. The outer sheet 12 prevents foreign substances such as liquids and dust from entering from outside the service hole cover 1 via the throughhole for the electric wire 9 into the inside.

In the following description, the portion of the electric wires 9 extending along the first surface 101 of the service hole cover 1 (first-surface side portion) will be referred to as inside wiring section 9a, and the portion of the electric wires 9 fed from the first surface 101 side through the service hole cover 1 to the opposing second surface 102 side (second-surface side portion) will be referred to as outside wiring section 9b. The inside wiring section 9a of the electric wires 9 is disposed further inward than the service hole cover 1, that is, toward the cabin-interior side. On the other hand, the outside wiring section 9b of the electric wires 9 is disposed further outward than the service hole cover 1, that is, toward the door panel 8 side.

### <Soundproofing sheets>

The double-layer soundproofing sheets 2 include superposed pairs of soundproofing sheets 2a, 2b. The individual soundproofing sheets 2a, 2b of each pair are made of a sheet-like sound insulation and are joined to the first surface 101 of the service hole cover 1, giving support also to the inside wiring section 9a of the electric wires 9. More specifically, the soundproofing sheets 2a, 2b of each pair are joined to each other in a superposed state that sandwichingly supports the inside wiring section 9a of the electric wires 9. In addition, the pair of soundproofing sheets 2a, 2b (double-layer soundproofing sheet 2) is joined to the first surface 101 of the service hole cover 1.

In the following description, one of a pair of soundproofing sheets 2a, 2b is referred to as first soundproofing sheet 2a while the other is referred to as second soundproofing sheet 2b. The first soundproofing sheet 2a is disposed, with respect to the inside wiring section 9a of the electric wires 9, on the side opposite to the side of the service hole cover 1, while the second soundproofing sheet 2b is disposed, with respect to the inside wiring section 9a of the electric wires 9, on the side of the service hole cover 1. Each of the pair of soundproofing sheets 2a, 2b has a two-dimensionally extending shape, and is formed in shape and thickness according to the required specifications.

Each of the pair of soundproofing sheets 2a, 2b is a sheet-like soundproofing material having flexibility and sound absorption, for example a non-woven fabric. For example, each of the pair of soundproofing sheets 2a, 2b is a non-woven fabric having a thickness of from about 20 mm to about 40 mm. In addition, the soundproofing material is also a sound absorbing material, a sound-deadening material, a cushioning material, and a damping material.

### <Non-woven fabric>

Here, an explanation shall be given about the non-woven fabric. A non-woven fabric to be employed as the soundproofing sheets 2a, 2b, for example, includes intertwined base fibers and an adhesive resin referred to as "binder". The adhesive resin is a thermoplastic resin having a melting point (e.g. from about 110 °C to about 150 °C) that is lower than the melting point of the base fibers. By heating such a non-woven fabric to a temperature higher than the melting point of the adhesive resin and lower than the melting point of the base fibers, the adhesive resin melts and dissolves into the gaps between the base fibers. If afterwards the temperature of the non-woven fabric cools down to a temperature lower than the melting point of the adhesive resin, the adhesive resin hardens in a state combining the base fibers present in its surroundings. Thus, the shape of the non-woven fabric is made harder than in the state before the heating, and is maintained as shaped by a mold during the heating.

The adhesive resin is, for example, resin in granular or fibrous form. It is also possible that the adhesive resin is formed so as to cover the periphery of a core fiber. Fibers having a structure of a core fiber coated in this way with adhesive resin are referred to as binder fibers. As material of the core fibers, for example, the same material as for the base fibers is employed.

Various fibers apart from resin fibers may be employed as the base fibers, provided that the fibrous state is maintained at the melting point of the adhesive resin. Or, for example, thermoplastic fibers having a lower melting point than the base fibers are employed as the adhesive resin. As a combination of base fibers and an adhesive resin to constitute the non-woven fabric, for example, it is contemplated to employ resin fibers composed mainly of PET (polyethylene terephthalate) as the base fibers, and a copolymer resin of PET and PEI (polyethylene isophthalate) as the adhesive resin. In such a non-woven fabric, the melting point of the base fibers is roughly 250 °C, while the melting point of the adhesive resin is a temperature of between about 110 °C and about 150 °C.

By heating a non-woven fabric comprising an adhesive resin in close contact with another member that includes a thermoplastic resin, the heated portion is welded to the other member.

Also, the non-woven fabric is moldable by hot press molding. Hot press molding means placing a non-woven fabric as a processing object between heating bodies such as dies, and applying pressure along with heating the non-woven fabric to thereby mold the non-woven fabric on the inner surface shape of the heating bodies.

If a non-woven fabric, in hot press molding, is cooled after being heated to a temperature in the range from about 110 °C to about 250 °C in a mold, it is molded into a shape following the inner surface of the mold because the adhesive resin melts to combine the surrounding base fibers, before the surface in contact with the heating elements hardens.

Although a member made from a non-woven fabric hardened by hot pressing has itself a certain degree of flexibility, its stiffness to maintain a constant shape is enhanced in comparison to the non-woven fabric before the hot pressing is performed.

### <Junction structure of double-layer soundproofing sheets>

As shown in FIG. 4, the inside wiring section 9a of the wires 9 is sandwiched between pairs of soundproofing sheets 2a, 2b. Then, the soundproofing sheets 2a, 2b of each pair are joined to one another.

In the wire harness 10, the soundproofing sheets 2a, 2b of each pair are joined to one another by being welded. Consequently, as shown in FIG. 1, first welds 31 and second welds 32 where the soundproofing sheets 2a, 2b of a pair are joined by welding are formed in the double-layer soundproofing sheets 2. Also formed in the double-layer soundproofing sheets 2 are third welds 4, which are portions joined to the service hole cover 1 by welding.

The first welds 31 are portions mainly serving to keep the soundproofing sheets 2a, 2b of a pair to each other. On the other hand, the second welds 32 are portions mainly serving to restrict the displacement of the inside wiring section 9a of the electric wires 9 sandwiched between the paired soundproofing sheets 2a, 2b. In the example shown in FIG. 1, the first welds 31 are formed along the outer edges of the double-layer soundproofing sheets 2.

For example, the first welds 31 are formed by hot press molding wherein a pair of soundproofing sheets 2a, 2b is placed between two heated dies.

On the other hand, the second welds 32 and the third welds 4 are spot welds, which are formed locally over a relatively small area. The spot welds are formed by pressing a heating body for performing spot heating against the double-layer soundproofing sheets 2. As the heating body for spot heating, for example, a welding horn in an ultrasonic welding machine such as an ultrasound stapler, or a metal rod with internal heater are possible.

Furthermore, it is also possible that the first welds 31 are a plurality of spot welds formed on the outer edges of the double-layer soundproofing sheets 2. Further, the spot shape of the spot welds is not limited to a circle. For example, it is also possible that the spot shape of the spot welds is a polygon such as a rectangle, an ellipse or another irregular shape.

A plurality of second welds 32 is formed at positions enclosing between them a plurality of regions within the inside wiring section 9a of the electric wires 9. These second welds 32 restrict the displacement of each of the plurality of regions on the inside wiring section 9a of the electric wires 9.

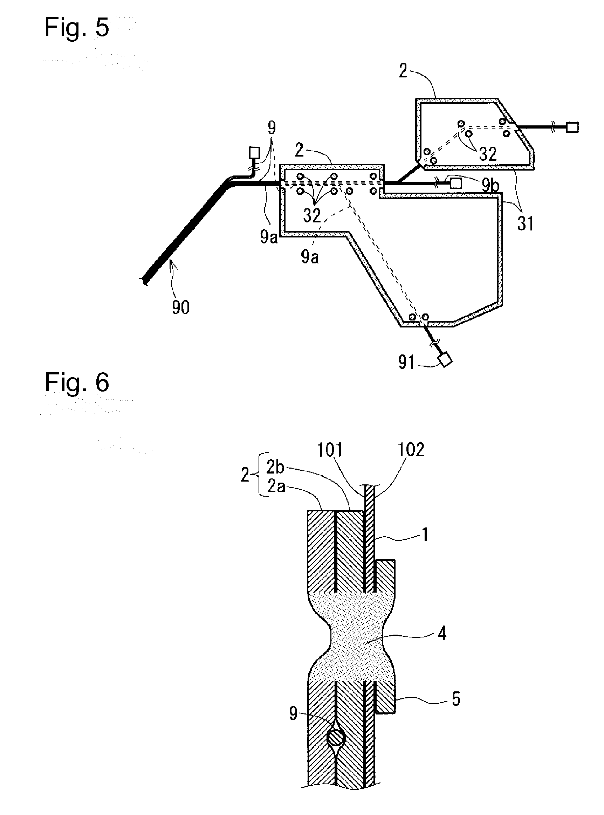

Each of the plurality of third welds 4 is a portion where a double-layer soundproofing sheet 2 and the service hole cover 1 are welded together. As shown in FIG. 6, the wire harness 10 includes a plurality of sheet pieces 5 abutted individually against a plurality of positions on the second surface 102 of the service hole cover 1.

Each of the plurality of sheet pieces 5 is a sheet-like member including a thermoplastic resin, for example of the same non-woven fabric as the soundproofing sheets 2a, 2b. The plurality of sheet pieces 5 is abutted individually against the plurality of positions of the third welds 4 on the second surface 102 of the service hole cover 1.

Then, each of the plurality of sheet pieces 5, in abutted state on the second surface 102 of the service hole cover 1, is joined by spot welding together with a double-layer soundproofing sheet 2 to the service hole cover 1. The portions welded in this manner are the third welds 4.

As described above, in the present embodiment, the junctions of the double-layer soundproofing sheets 2 (pairs of soundproofing sheets 2a, 2b joined in a superposed state) include the first welds 31, the second welds 32, and the third welds 4. Here, the third welds 4 are portions where the service hole cover 1, a sheet piece 5 abutted against the second surface 102 of the service hole cover 1, and each of the pair of soundproofing sheets 2a, 2b are joined by welding. Furthermore, it is also possible that all junctions of the double-layer soundproofing sheets 2 are third welds 4.

### <Wire fastening portion>

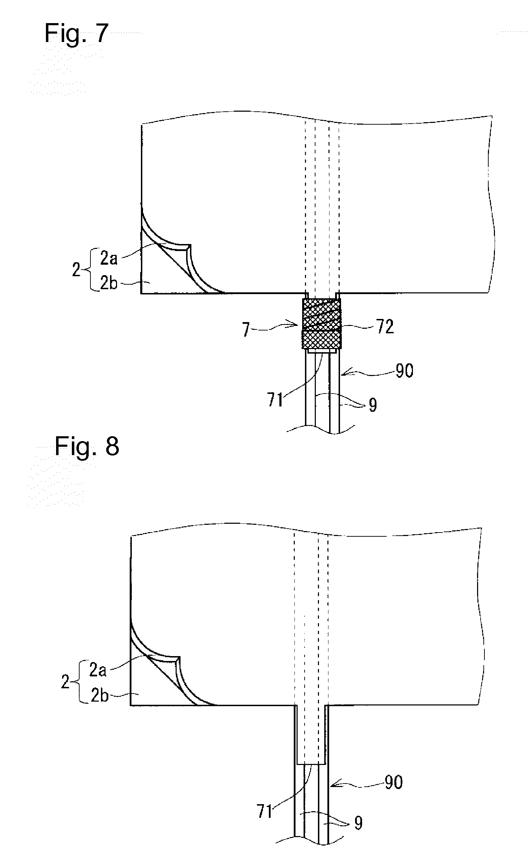

Next, an example of a wire fastening portion of a soundproofing sheet that can be employed in the wire harness 10 will be explained. FIG. 7 is a front view of a wire fastening portion of a soundproofing sheet employable in the wire harness 10. FIG. 8 is a front view of a tongue portion of the soundproofing sheet employable in the wire harness 10.

As shown in FIGS. 7 and 8, it is possible to provide a wire fastening portion 7 for fastening a part of the inside wiring section 9a of the electric wires 9 to an edge on one side or both sides of a pair of soundproofing sheets 2a, 2b.

The wire fastening portion 7 is composed of a tongue portion 71 formed at an edge on one side or both sides of the pair of soundproofing sheets 2a, 2b, and a tie 72 for tying together the tongue portion 71 and the inside wiring section 9a of the electric wires 9.

As shown in FIG. 7 and 8, the tongue portion 71 is formed on an edge on one side or both sides of the pair of soundproofing sheets 2a, 2b at a portion crossed by the electric wires 9, projecting outward beyond the portions on either side. In the example shown in FIG. 7 and 8, the tongue portion 71 is formed to protrude outward from where said tongue portion 71 is formed in at least one of the pair of soundproofing sheets 2a, 2b. Furthermore, it is also possible that notches are formed in at least one edge of a pair of soundproofing sheets 2a, 2b to either side of a portion crossed by the electric wires 9. In this case, the portion crossed by the electric wires 9 will be a tongue portion 71 projecting outward beyond the bottom portions of the notches on either side.

Further, the electric wires 9 are fixed by a tie 72 such as an adhesive tape or band for tying electric wires to the tongue portion 71. FIG. 8 shows the tongue portion 71 and the electric wires 9 before being fixed by a tie 72. In FIG. 7 the wire fastening portion 7 is shown, which comprises the tongue portion 71 and a tie 72 that ties the tongue portion 71 and the electric wires 9 together.

### <Effect>

The wire harness 10 has a structure obtained by uniting the wire group 90 and the service hole cover 1, which is a sheet-like cover member, in a state after the electric wires 9 have been fed through the service hole cover 1. Therefore, just by performing the task of connecting the outside wiring section 9b of the electric wires 9, which have been fed through the service hole cover 1 beforehand, to the electrical equipment in the door panel, and the task of attaching the service hole cover 1 to the inner surface of the door panel 8, installation work for the service hole cover 1 and the wire group 90 on the door panel 8 is complete. Consequently, in addition to the task of fixing a part of the electric wires 9 to the door panel 8 being unnecessary, the troublesome and difficult task of feeding electric wires 9 through the service hole cover 1 to connect them to the electrical equipment in the door panel 8 is unnecessary, too. This enables a simplification and reduction in the number of steps of the installation work for the service hole cover 1 and the wire group 90.

Furthermore, because the wire group 90, which is united with the service hole cover 1, does not need to be fixed directly to the door panel 8, there is no need for it to be wired across a plurality of fixing positions outside the service hole cover 1 and the position of the slit 11 within the service hole cover 1. Therefore, if the wire harness 10 is employed, a reduction over the prior art in weight and cost of the wire group 90 is enabled.

Furthermore, in the wire harness 10, the wire group 90 is supported by the double-layer soundproofing sheet 2, which is joined to the service hole cover 1. Therefore, by performing only the task of connecting the electric wires 9 that pass through the service hole cover 1 to the electrical equipment, and the task of attaching the service hole cover 1 to the inner surface of the door panel 8, the installation work for the service hole cover 1, the wire group 90, and the soundproofing sheets 2a, 2b on the door panel 8 is complete. Consequently, the number of installation steps for parts such as a wire harness to the door panel 8 is further reduced.

Moreover, in the wire harness 10, there are no holes formed in the service hole cover 1 for uniting the wire group 90 and the service hole cover 1. Therefore, the waterproof performance and dustproof performance of the service hole cover 1 are not lowered.

In addition, the soundproofing sheets 2a, 2b prevent that abnormal noise arises when electric wires 9 hit against surrounding objects. In particular, in the wire harness 10, the electric wires 9 are united with the service hole cover 1 by being sandwiched between paired soundproofing sheets 2a, 2b, which are joined to the service hole cover 1. For this reason, the paired soundproofing sheets 2a, 2b more reliably protect against noise.

Furthermore, in the wire harness 10, the service hole cover 1 is welded to the double-layer soundproofing sheets 2 and sheet pieces 5, which include a thermoplastic resin, in a state of being sandwiched between the sheet pieces 5 and the double-layer soundproofing sheets 2. This enables to prevent the thin service hole cover 1 from being torn or deformed by heat when the service hole cover 1 and the double-layer soundproofing sheets 2 are being welded.

Also, as shown in FIG. 7, in the wire harness 10, a positional deviation of the soundproofing sheets 2a, 2b is prevented due to the electric wires 9 being fixed by the tie 72 to the tongue portion 71. In particular, the wire fastening portion 7 is effective in reliably keeping constant the length of the portions of the wire group 90 that stick out of the soundproofing sheets 2a, 2b.

### <Second embodiment>

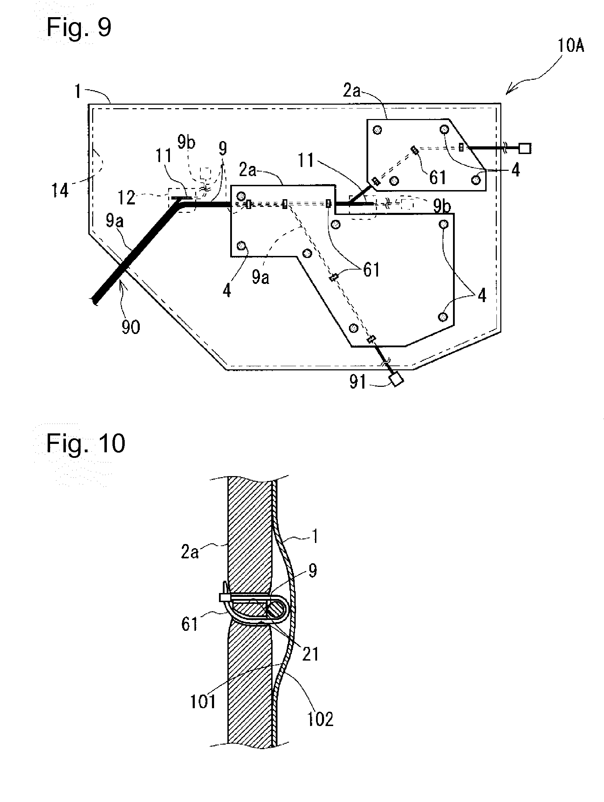

Next, referring to FIGS. 9 and 10, will be described a wire harness 10A according to a second embodiment of the present invention. FIG. 9 is a front view of the wire harness 10A. FIG. 10 is a cross-sectional view of a wire supporting portion of a soundproofing sheet in the wire harness 10A.

The wire harness 10A, compared with the wire harness 10 shown in FIG. 1, has a structure wherein one of each pair of the soundproofing sheets 2a, 2b has been omitted. In FIGS. 9 and 10, components identical to components shown in FIGS. 1 to 6 have been assigned the same reference numerals. Below, only aspects of the wire harness 10A that differ from the wire harness 10 will be explained.

The wire harness 10A comprises the wire group 90, the service hole cover 1, and first soundproofing sheets 2a. The first soundproofing sheets 2a are joined to the first surface 101 of the service hole cover 1, giving support also to the inside wiring section 9a of the electric wires 9. That is, the wire group 90 and the service hole cover 1 are united via the first soundproofing sheets 2a.

In the example shown in FIGS. 9 and 10, the inside wiring section 9a of the electric wires 9, due to a plurality of parts thereof having been tied using a tie 61 to a portion of the first soundproofing sheets 2a, is supported by the first soundproofing sheets 2a. Accordingly, the inside wiring section 9a of the electric wires 9 is positioned between the first surface 101 of the service hole cover 1 and the first soundproofing sheets 2a.

More specifically, as shown in FIG. 10, on either side of the path of the inside wiring section 9a on the first soundproofing sheets 2a, pairs of through-holes 21 are formed. Ties 61 are passed through each pair of through-holes 21 in the first soundproofing sheets 2a to tie together the electric wires 9 and the portions between the through-holes 21 of each pair in the first soundproofing sheets 2a.

Note that the first soundproofing sheets 2a and the service hole cover 1 are welded using a structure identical to the third weld 4 shown in FIG. 6. That is, in each of a plurality of positions of service hole cover 1, a sheet piece 5 including a thermoplastic resin, in abutted state on the second surface 102 of the service hole cover 1, is joined by spot welding together with a first soundproofing sheet 2a to the service hole cover 1.

Also by employing the wire harness 10A shown in FIG. 9, it is possible to obtain the same effect as when the wire harness 10 is employed.

It should be noted that it is also possible to employ, in the wire harness 10A, second soundproofing sheets 2b instead of the first soundproofing sheets 2a. In this case, the inside wiring section 9a of the electric wires 9 is supported, by the second soundproofing sheets 2b, in a state extending along the surface of the second soundproofing sheets 2b that is opposite to the service hole cover 1 side.

### <Third embodiment>

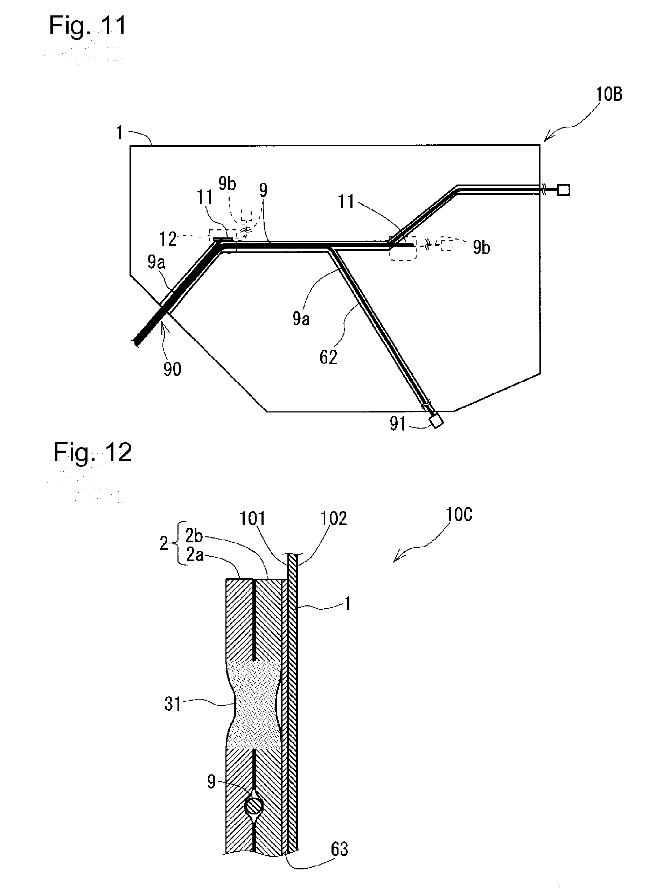

Next, referring to FIG. 11, a wire harness 10B according to a third embodiment of the present invention will be described. FIG. 11 is a front view of the wire harness 10B.

Compared with the wire harness 10 shown in FIG. 1, the wire harness 10B has a structure in which the double-layer soundproofing sheets 2 have been omitted. In FIG. 11, components identical to components shown in FIGS. 1 to 6 have been assigned the same reference numerals. Below, only aspects of the wire harness 10B that differ from the wire harness 10 will be explained.

The wire harness 10B comprises the wire group 90 and the service hole cover 1. In the wire harness 10B, the inside wiring section 9a of the wire group 90 has been adhered on the first surface 101 of the service hole cover 1, whereby the wire group 90 has been united with the service hole cover 1.

As shown in FIG. 11, the inside wiring section 9a of the electric wires 9 is bonded to the first surface 101 of the service hole cover 1 by an adhesive 62. The adhesive 62 is, for example, a double-sided adhesive tape such as butyl tape, or a spreadable adhesive based on a synthetic resin such as silicone resin. Note that also a tackifier such as butyl tape is a kind of adhesive 62.

Also by employing the wire harness 10B shown in FIG. 11, a simplification and reduction in the number of steps of the attachment work is enabled, and moreover it becomes possible to decrease the weight and cost of the wire harness, in the same way as when the wire harness 10 is employed.

### <Fourth and fifth embodiments>

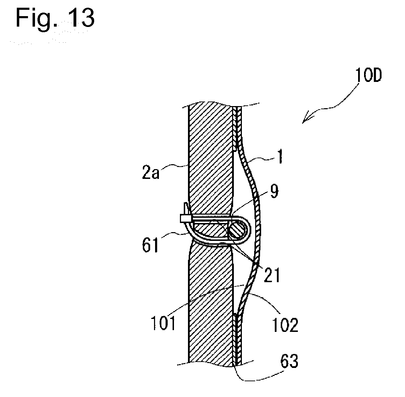

Next, referring to FIGS. 12 and 13, will be described a wire harness 10C according to a fourth embodiment, and a wire harness 10D according to a fifth embodiment of the present invention. FIG. 12 is a cross-sectional view of a junction of a soundproofing sheet and a service hole cover in the wire harness 10C. FIG. 13 is a sectional view of a junction between a soundproofing sheet and a service hole cover in the wire harness 10D.

The wire harness 10C differs, compared to the wire harness 10 shown in FIG. 1, only in the junction structure between the service hole cover 1 and the double-layer soundproofing sheets 2. Similarly, the wire harness 10D differs, compared to the wire harness 10A shown in FIGS. 9 and 10, only in the junction structure between the service hole cover 1 and the first soundproofing sheets 2a. In FIGS. 12 and 13, components identical to components shown in FIGS. 1 to 11 have been assigned the same reference numerals. Below, only aspects of the wire harness 10C that differ from the wire harness 10 as well as aspects of the wire harness 10D that differ from the wire harness 10A will be explained.

In the wire harness 10C, at least part of the first soundproofing sheets 2a, on the service hole cover 1 side in the double-layer soundproofing sheets 2, is joined to the first surface 101 of the service hole cover 1 by an adhesive 63. Similarly, in the wire harness 10D, at least part of the first soundproofing sheets 2a is joined to the first surface 101 of the service hole cover 1 by an adhesive 63.

In the wire harnesses 10C, 10D, the adhesive 63 may be formed over the entire region of the first soundproofing sheets 2a, or may be formed only in a partial region of the first soundproofing sheets 2a. Also, as junctions of the service hole cover 1 and the first soundproofing sheets 2a in the wire harnesses 10C, 10D, junctions based on the adhesive 63 may be employed along with the third welds 4 of the wire harness 10, or only junctions based on the adhesive 63 may be employed.

The adhesive 63 is, for example, a double-sided adhesive tape such as butyl tape, or a spreadable adhesive based on a synthetic resin such as silicone resin. Note that also a tackifier such as butyl tape is a kind of adhesive 63.

If the service hole cover 1 and the first soundproofing sheet 2a are joined by an adhesive 63, the service hole cover 1 is not heated to a high temperature. This enables to prevent the thin service hole cover 1 from being torn or deformed by heat.

In addition, a wire harness according to the present invention can be composed, within the scope of the invention recited in the claims, by freely combining the embodiments shown above, or by removing parts of or modifying each embodiment as appropriate.

### List of Reference Numerals

- 1: service hole cover (cover member)
- 2: double-layer soundproofing sheet
- 2a: first soundproofing sheet
- 2b: second soundproofing sheet
- 4: third weld
- 5: sheet piece
- 7: wire fastening portion
- 8: door panel
- 9: electric wire
- 9a: inside wiring section (first-surface side portion)
- 9b: outside wiring section (second-surface side portion)
- 10, 10A, 10B, 10C, 10: Dwire harness
- 11: slit
- 12: outer sheet
- 13: inner sheet
- 14: portion adhered
- 21: through-hole
- 31: first weld
- 32: second weld
- 61, 72: tie
- 62, 63: adhesive
- 71: tongue portion
- 81: service hole
- 90: wire group
- 91: connector
- 101: first surface of service hole cover
- 102: second surface of service hole cover
- 121: edge of outer sheet

## Claims

1. A wire harness comprising:
a flexible sheet-like cover member having flexibility to be attached to the inside of a door panel of a vehicle; and
an electric wire including a first-surface side portion extending along a first surface of the front and rear surfaces of the cover member, and a second-surface side portion fed through the cover member from the first-surface side to an opposing second-surface side, the electric wire being united with the cover member at the first-surface side portion.

2. The wire harness according to claim 1, further comprising a soundproofing sheet made of a sheet-like sound insulation and joined to the first surface of the cover member, giving support also to the first-surface side portion of the electric wire.

3. The wire harness according to claim 2, comprising a pair of soundproofing sheets joined to each other, in a superposed state that sandwichingly supports the first-surface side portion of the electric wire, along with being joined to the first surface of the cover member.

4. The wire harness according to claim 2 or 3, further comprising a plurality of sheet pieces, which include a thermoplastic resin and are joined, by spot welding in a state individually abutted against a plurality of positions on the second surface of the cover member, to the cover member together with the soundproofing sheet.

5. The wire harness according to claim 3, wherein a junction of the pair of soundproofing sheets joined in the superposed state includes a portion wherein the pair of soundproofing sheets, the cover member, and a sheet piece that includes a thermoplastic resin and abuts the second surface of the cover member are joined by welding.

6. The wire harness according to any one of claims 2 to 5, wherein at least part of the soundproofing sheet is joined by an adhesive to the first surface of the cover member.
